# EUROPEAN PATENT SPECIFICATION

(11) **EP 1 222 355 B1**
(45) Date of publication and mention of the grant of the patent: **08.02.2006**
(21) Application number: 00935419.2
(22) Date of filing: 04.05.2000
(51) Int. Cl.: E06B 5/20, E06B 3/64, E06B 3/24

(54) **Building partition and window with airtight frame**
Gebäudetrennwand und Fenster mit luftdichtem Rahmen
Paroi et fenètre avec cadre imperméable à l'air

(30) Priority: 06.05.1999 US 306492
(43) Date of publication of application: 17.07.2002
(73) Proprietor: Valderrama, Maria Teresa, 1200 Vienna (AT); Valderrama, Mario, 1200 Vienna (AT)
(72) Inventor: VALDERRAMA, Mario, A-1200 Vienna (AT)
(74) Representative: Heiland, Karsten
(86) International application number: PCT/IB2000/000747
(87) International publication number: WO 2000/068540

(56) References cited:
- EP-A- 0 113 557
- EP-A- 0 421 239
- WO-A-98/25001
- DE-A- 1 683 103
- DE-A- 3 808 907
- DE-A- 3 935 780
- FR-A- 2 672 930
- US-A- 4 791 762

## Description

### BACKGROUND OF THE INVENTION

### Field of the Invention

The invention is generally related to the manufacture of windows and other building partitions, and more specifically to multiple pane thermo-acoustic windows and other building partitions, such as doors, walls and ceilings. The invention is an improvement of current systems for producing two pane thermo-acoustic windows and one-pane windows for houses and buildings, especially systems that use a plastic or metallic material to make the profiles and the frame, although it is also applicable to frames made of wood. The new system can be employed in other similar products like partitions, doors, and ceilings.

### Description of the Related Art

The insulating effect of thermo-acoustic windows currently on the market originates mainly from the two-glazed unit accommodated on the window frame. Acoustic insulation is achieved because when a noise is produced at the exterior of the panes, the air inside the chamber vibrates less than the air outside, which reduces the sound level between the focus and the other side of the two-glazed unit. Any tiny orifice that allows communication between the inside air and the outside air reduces the noise-insulating capacity of the window. For this reason, thermo-acoustic windows require good sealing contact in all critical points specially, in the unions of profiles that form the window frame, in the contact area of the glass panes with the window frame, and in the contact area between the window and the wall. Since sound does not travel in a vacuum, an airtight unit with a vacuum inside will have better insulating capacity. In a similar way, when the two sides of the airtight unit are exposed to different temperatures, thermal insulation is achieved because the air inside the unit reaches a temperature between the outside and inside temperatures. Here also, any tiny orifice that allows air to enter in the unit reduces its insulating capacity.

Thermo-acoustic windows having PVC framing have insulating advantages over windows having framing made of aluminum and similar materials. However, certain drawbacks in currently available systems of construction and installation of windows having PVC framing limit the use of thermo-acoustic windows having PVC framing. The most advanced construction technology currently used over the world to form thermo-acoustic windows having PVC framing involves the construction of a window frame by fusion welding plastic (PVC, vinyl) profiles designed to accommodate an insulating chamber, which is made by glazing two glass panes separated by 20 to 25.4 millimeters. The technology uses a sealing material along the interior edge of two glass panes in order to bind the panes together. A device with desiccating material is inserted to absorb humidity and avoid condensation and fogging at low temperatures. In some cases the air inside is replaced by an inert gas.

A building partition with the features mentioned in the introductory part of claim 1 is described in EP-0 421 239 A.

Although this technology achieves good contact with rubber-like sealants, the insulating two-glazed unit is not in tight contact with the window frame leaving tiny spaces and orifices between them. Additionally, the weight of this unit, the largest of the whole window, rests entirely on the bottom side of the window frame. In some cases, a reinforcing metal is introduced in this profile.

It is an object of the present invention to provide an assembly system for thermo-acoustic windows that renders airtight sealed unions in profiles that make the frame.

It is another object of the present invention to provide an assembly system for thermo-acoustic windows that does not require a fusion-welding machine for assembling the window frame.

It is still another object of the present invention to provide an assembly system for thermo-acoustic windows that allows a user to make and insulating airtight unit directly on the window frame.

### SUMMARY OF THE INVENTION

The present invention provides a system to build a two glass pane thermo-acoustic window that renders airtight sealed unions in profiles that make the frame, does not require a fusion-welding machine, and allows a user to make an insulating airtight unit directly on the window frame. The system is based on a specially designed set of profiles and joints, and a valve. The frame unions are airtight sealed because the profiles and the joints are designed and manufactured to be inserted one into the other, with a precision and tolerance that, with a bonding material, forms seal on the contact surfaces. The design additionally provides an adherent surface on the window frame which, using a binding material, seals the glass panes and frame to create an airtight unit. With this new construction system, it is possible to achieve a sealing of unions such that the interior of the frame becomes an airtight duct. In turn, this hermetic condition makes possible to use a permanent valve to take out the air inside the frame and the airtight unit between the glass panes.

Although the joints used to make airtight sealed unions have been used for other purposes, they are not used currently for construction of one or two glass pane windows. Furthermore, the joints have not been designed for window profiles and joints with such a purpose. The window profiles currently available in the market do not include hermetic unions or designs to create an airtight unit directly on the window frame, nor to make a vacuum inside the frame and chamber between the glass panes at assembly or afterwards.

### BRIEF DESCRIPTION OF THE DRAWINGS

These and other features, aspects, objects and advantages of the present invention will become better understood upon consideration of the following detailed description, appended claims and accompanying drawings where the set of profiles, joints and the valve that make up the snap on assembly system are exemplified by the following figures:
Figures 1 to 3 are perspective views of basic profile and joints and an exploded position for assembling.
Figures 4 and 5 show the assembling of basic profile and glass panes.
Figures 6 and 7 show the double profile and the Tee to assemble it and the basic profile.
Figures 8 to 11 show other profiles and joints for the assembling of the window.
Figure 12 show a trim and Figures 13 to 15 show the various components of the valve.
Figure 16 shows an assembled window.
Figure 17 shows an assembled window and a list and position of components in this system.

It should be understood that the drawings are not necessarily to scale and that the embodiments are sometimes illustrated by graphic symbols, phantom lines, diagrammatic representations and fragmentary views. In certain instances, details that are not necessary for understanding the invention or which make other details difficult to perceive may have been omitted. It should be understood, of course, that the invention is not necessarily limited to the particular embodiments illustrated herein. Like reference numerals will be used to refer to like parts throughout the Figures.

### DETAILED DESCRIPTION OF THE INVENTION

The technology of this invention is new as compared to the one currently used in the construction of PVC and aluminum windows and requires special design and manufacturing of its components and for the assembly of the window. Among the objectives achieved by the invention are: (1) the use the insulating potential of a vacuum in an easy and practical way, and (2) the sealing of the window frame joints without a machine. Meeting the first objective requires the creation of an airtight unit and a valve to make a vacuum.

The design of profiles and joints to create and airtight unit had to solve several critical details. First, it was necessary to provide an *adherent surface* (*as*) flat, even and uniform on the window frame, and second, to establish the height of the profile that contacts the glass pane, which has to be the minimum necessary in order to make profile production cost effective. Similarly, the distance of the *pane separation* (*ps*) had to be developed since the larger the separation, the greater the insulating capacity, but also the higher the cost, since the danger of a window collapsing by atmospheric pressure increases more than proportionally when a vacuum is made. The insulating capacity (I*C*) of the two-pane window depends on the level of vacuum (*ap*) created inside the airtight unit, on the separation distance of two glass panes (*ps*), and on the thickness (*pt*), type and quality (*k*ᵢ) of the glass. The relationship among these factors can be written as: $IC = {ps}^{b} X ( {pt}^{c} \times {k}_{i} ) / {ap}^{e}$
Where:
*ap* = atmospheric pressure, has values from 1 to 0 (or very near to 0)
b, c and e are constants that depends on each situation, and
*k* is a constant that depends on the type and quality of glass.

However, the distance between glass panes and size of the adherent surface affect the cost of profiles and joints more than proportionally. For each increasing unit of *ps*, it would be necessary to increase the thickness of all the walls of profiles and joints to endure atmospheric pressure and avoid collapsing of the structure. The relationship of design and measurements with respect to these two factors and costs can be written as: $CIC = ( {P}_{1} \times {ps}^{β} ) + ( {P}_{2} \times {pt}^{δ} ) + {P}_{3} {k}_{i} + {P}_{4} \times {ap}^{ϵ}$
where:
CIC is the Cost of Insulating Capacity
*P*_{*i*} are the respective prices and *P*_{*4*} x *ap* is negligible
β, δ and ε have values depending on each situation, and

the values of these corresponding parameters have the following condition: b<β, d<δ and e<ε.

Various frames made with profiles and joints were tested for air-tightness and structural strength against collapsing by atmospheric pressure. When the air in airtight unit is evacuated, atmospheric pressure works on the whole structure in all directions, which has to be withstood by profiles, joints and glass panes. There is a *critical area* on the glass panes of the airtight unit with a vacuum inside defined as the area beyond which the glass pane will not sustain atmospheric pressure and would shatter. For this reason, it is necessary to take into consideration the collapsing *critical area* of the glass panes in the design of the window. The extent of the this area depends on:
- The level of vacuum inside the airtight unit,
- The area of the glass pane to the nearest support point on the frame,
- The thickness (*pt*), type and quality of the glass (kᵢ);
- The altitude of the window from sea level, and
- The presence of quick, high and frequent changes in temperature.

Based on several tests with prototypes it was found that, providing for.safety margins, this critical area is of about 60 centimeters from the nearest support point on the frame, for regular glass panes of 4 millimeters thickness at altitudes from 0 to 2,600 meters above sea level. The frame structure made of profiles and joints can also collapse by atmospheric pressure, which is prevented by design, thickness of the walls and quality of the raw material and manufacturing. Glass pane collapsing can be prevented by inserting inside the airtight unit a supporting device between and in contact with the panes at distances of about 60 centimeters. These supports can be of two types: *decorative* such as the colonial grills currently used by window manufacturers, or *dissimulated* in such a large variety of small cylinders made of clear plastic material glued to the internal surface of the panes up to vertical and horizontal strips assembled together.

The second objective of assembling profiles without the use of a machine was achieved by using specially designed profiles and joints that can be manually snapped together and a binding material to make an airtight seal between the profiles and joints.

Commercial production starts with final design of profiles and joints and the associated specifications for the tooling of molds or matrices to extrude the profiles and injection mold the joints and the valve. In addition to the steps common to current thermo-acoustic window building techniques, such as measurement and cutting of profiles, this system has several specific procedures for the assembly and installation of the window:

As a first step, the user of the production and installation system of the present invention determines the needs of the consumer, such as the type of window desired and the basic measurements for the window to be installed. Hollow window profiles are then cut to a specific size based on the consumer needs. The profiles are then manually assembled using hollow joints to make up a first preliminary window frame. The first preliminary window frame is then placed in a wall opening to determine whether a proper fit exists between the frame and the wall opening. If the window frame does not fit properly in the wall opening, the profiles are re-cut to fit the wall opening.

When a proper fit is obtained between the window frame and the wall opening, the window frame is disassembled and then reassembled using a gluing between the window profile sections and the joints. The hollow window frame includes at least one valve that is in communication with the hollow section of the assembled window frame. The valve may be provided as an integral part of a profile section or joint, or alternatively, the valve may be installed in a joint or profile section of the window frame before the frame has been assembled. An adhesive is then applied on the inward surfaces of the assembled window frame and two cleansed glass panes are installed on the frame in a substantially parallel spaced relationship. The hollow window frame includes at least one hole that is placed in communication with the airtight unit that is formed between the two glass panes. The air remaining in the hollow window frame and the airtight unit between the two glass panes is then removed by way of the valve and any suitable air extraction apparatus. The valve is then closed to maintain an airtight seal.

In other versions of the invention, (1) a desiccating material may be added in the window frame, (2) reinforcing material may be added to the window frame before final gluing of the frame, (3) supports may be installed between the glass panes, and (4) argon gas may be pumped into the hollow window frame and the airtight unit between the two glass panes. The assembly process can be completed by: (1) snapping in trim on the external side of the window; (2) securing the window in the final site by screwing it on the wall opening; (3) filling in orifices between the wall and the window frame; (4) covering the screws and the valve with trim; and (5) testing for noise insulation.

In conclusion, we can say that the most advanced building system of thermo-acoustic windows currently used all over the world is based on the union by fusion welding of PVC profiles to make the window frame. Profiles are designed to accommodate a doubled-glazed unit made of two glass panes, which is built separately and then secured in the frame using gaskets but it is not hermetically sealed to the frame. The new construction technique creates airtight sealing in the frame joints, makes the fusion welding machine unnecessary, forms an airtight unit within the glass panes on the window frame, which in turn makes it possible to take out the air inside this structure, at will and at any moment. By making a vacuum, atmospheric pressure presses together the glass panes against the frame, which improves the structural strength since glass panes and the frame form a structural unit. Additionally, the glass pane weight is distributed to all sides of the frame and does not rest entirely on its bottom side, as happens with current technology.

In summary, the system has several discoveries that are solutions to several technical and cost problems of current technology to assemble thermo-acoustic windows.
**First,** the assembly of components that form the frame does not require a fusion-welding machine but are manually or by a machine snapped on together.
**Second,** this assembly renders an airtight seal frame and forms an adherent surface that allows binding the glass panes directly onto the frame forming an airtight unit.
**Third,** this in turn makes possible to use a permanently installed vacuum control valve that, connected to an air extractor, can make a vacuum at will in the airtight unit and in the hollow frame.
**Fourth,** this in turn has several advantages:
1. Atmospheric pressure acts upon the frame components improving its binding and adheres the gluing material firmly to the glass panes and to the frame;
2. The frame and the glass panes form one structure that distributes the strain all over the frame and not only on the bottom horizontal profile as happens with current technology;
3. The vacuum created in the airtight unit and in the frame increases the insulating capacity of the window;
4. The vacuum inside the airtight unit can be of different levels, depending on the specific requirements, however, insulation is improved even with low levels of vacuum, which can be achieved with small capacity air extractors, and domestic vacuum cleaners;
5. The air extraction at will substantially reduces the humidity inside the airtight unit. However, desiccating material can be concealed within the frame, improving appearance and reducing cost, as the desiccating material will not be seen around the binding material of the airtight chamber, as in currently produced two glass pane windows;
6. The valve can also be used to extract air and to insert and inert gas or any other gas-like material, at assembly or after installation, at any time. This allows a user to make vacuum in one season and inflow an inert gas in the other; to make vacuum if the main purpose is to insulate from noise or insufflate a gas if the main purpose is for thermal insulation (i.e. argon gas has lower thermal conductivity than air);
7. Since the window is formed by binding glass panes directly on the frame, there are no orifices between the airtight unit and the frame, and rubber-like sealants are not required. The elimination of air-filled spaces and seals improves insulating capacity and reduces window vibration, as well as costs;
8. The use of a support device between the glass panes, like colonial grilles, allows a user to use the system for any practical window size;

Additionally,
9. The system can be used with any type of glass and thickness and for any type of frame: plastic, aluminum or wood. When the frame is made of wood snapping joints are not applicable, although the airtight unit can be built directly on the frame but a vacuum can not be maintained permanently, unless a plastic or similar overlay is added in the inside portion of the frame.
10. The manual assembly by snapping on profiles and joints allows a user to assemble the window at the final site, reducing the differences in measurements between the window and the wall opening;
11. Final users can buy assembled windows ready to install or separate components for do-it-yourself assembly;
12. The system allows a user to insert reinforcements into the profile, maintaining the airtight condition;
13. The system can be used for any type of double glass pane window and for any other purpose where snapping on of parts is possible, i.e. replacing assembly systems based on fusion welding, whether or not an airtight chamber is built or whether or not the panes are transparent. Examples include transparent roofs (patio porches, green houses), partitions, ceilings and the like.
14. The snap on assembly of profiles and joints can be used for one glass pane window and for other similar uses; and
15. If air leaking is detected, i. e. the airtight unit does not keep up the vacuum, the leaking point or points can be detected by pumping in a colored gas. The leaking orifice can be fixed on the spot without disassembling the window by adding a glue-binding material while making a vacuum, that is, atmospheric pressure will push in the glue-binding material in the orifice while the air extractor suctions, thereby clogging the orifice with glue-binding material.

### Glossary and Definitions

As used throughout this text, the following terms have meanings given below:
**Acoustic insulating capacity:** Capacity to insulate houses and buildings from day to day annoying noise, composed of different wave length and intensities, audible by human ear and measured by standard methods and devices.
**Air extractor:** A device, which connected by a flexible tube to a valve, allows a user to remove air from the airtight unit, like a vacuum cleaner. Usually, such a device can also pump air in.
**Airtight unit:** A unit in window for a house or building built by bonding two cleansed glass panes directly on an airtight frame so built that it does not allow air to enter for a reasonable time span, and in which different levels of vacuum can be made at will.
**Binding material:** A gluing material with properties to bind glass panes and a frame for a reasonable time span, strong and flexible enough to sustain temperature variations and expansion differences between glass and plastic.
**Improvement of thermal and acoustic insulating capacity:** Any higher or better thermal or noise insulation achieved by the windows, measured with commonly used devices and standards.
**Precision male joint:** Any structure made of a plastic, metallic material or wood, having a protruding part with given dimensions that performs as a male joint that inserts in the female joint and having dimensions allowing the use of a glue-binding material.
**Two-glazed unit.** A unit in window for a house or building built by bonding two cleansed glass panes using an aluminum support at the edge of the pane that has the purpose of holding the two glass panes apart in a parallel position and retaining the bonding material.
**Profile:** Any structure made of a plastic, metallic material or wood, produced having external walls and a hollow space with given dimensions that performs as a female joint.
**Sealant, sealant material:** Any material with the property to substantially obstruct the passage of air from the outside to the inside of a hollow space within the frame and in the airtight unit.
   **Support device** between the glass panes: Any physical support hold in any way between the two glass panes that make them able to withstand atmospheric pressure.
**Thermal insulating capacity:** Capacity to insulate houses and buildings from day to temperature changes in all seasons, with the understanding that vacuum does not insulate from radiant heat.
**Vacuum**: Any pressure lower than atmospheric pressure at the site where the window is assembled and installed.

### GENERAL DESCRIPTION OF THE INVENTION

An assembly system for thermoacoustic windows in accordance with the present invention comprises a set of profiles and precision joints manufactured with spacing for a sealing material, and a vacuum control valve. The accompanying drawings depict a basic model for a casement window to be directly screwed to the wall opening, though they are suitable to be used along with a frame installed previously on the wall opening to receive the window name proper. Profiles and joints can be designed for any type of window: awning, bay, casement, double hang sashes, picture, slider, for partitions and for one glass pane window. These drawings have the purpose to show the basic idea of the system, the components that make up the window and how they fit together. Since they are designed to be snapped one into the other, their main features and functions coincide and repeat. To make it easier to follow the identification of the features of each drawing, the following numbering system was used:
1) The hollow part of a profile, equivalent to a female joint, is identified by two digits, the last one being zero (0),
2) The male joint is identified by two digits, the last one being one 1, in such a way that the female joint 10 matches the male joint 11, the 20 the 21, etc.
3) Except for the first one, the components have been identified by two digits in groups of ten, in such a way that the feature and function 3 corresponds to 13, 23, 33, ... 4 to 14, 24, 34, etc.

### Preferred Embodiments. Two glass panes or thermoacoustic window

### 1. Basic profile

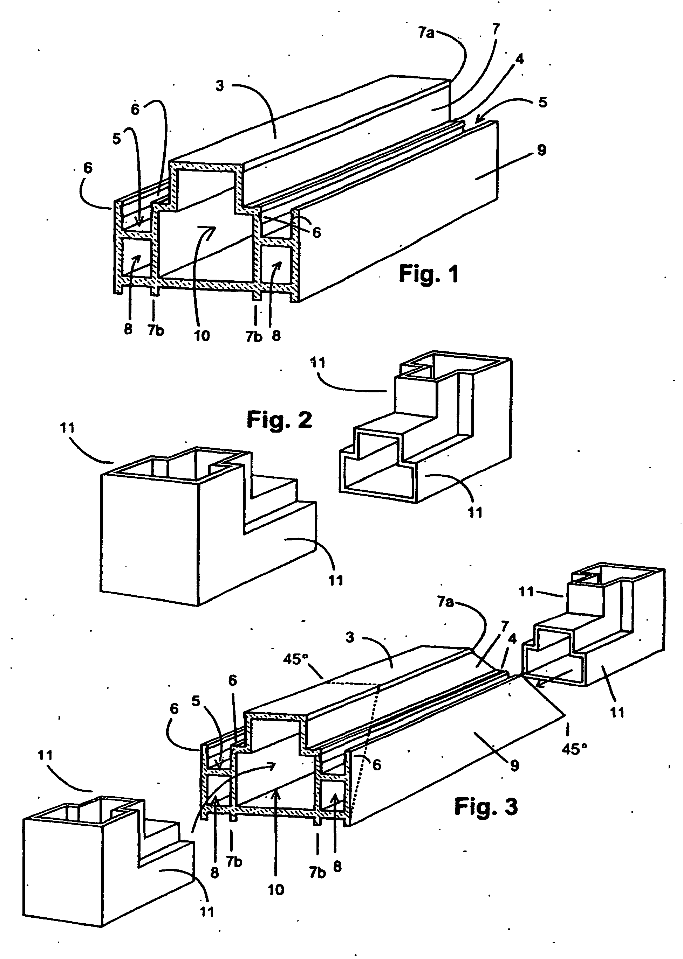

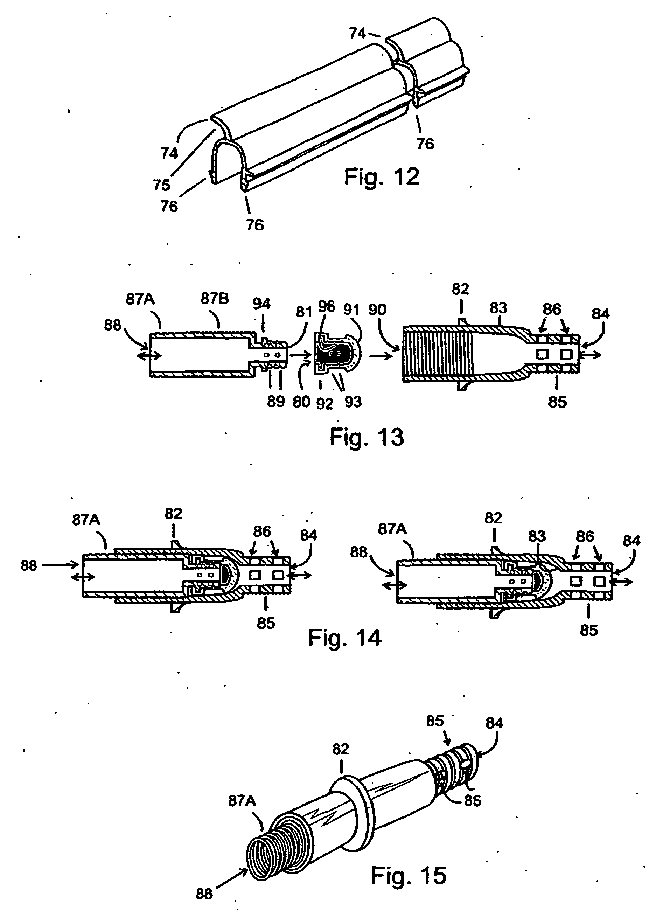

Figure I depicts a cross section and perspective view of a section of the basic profile, with a glass panes separation distance 3, spaces 4 for the glass panes, the hole 5 for screws, a support and notches 6 for a trim (shown in Fig. 12), an adherence or inward surface 7 of the window frame for contacting the pane and a protruding edge 7a to retain the sealing material, a chamber 8 for the screws that secure the window to the wall opening, the outer surface 9 or wall of profile and the hollow space or airtight chamber 10 where the male joint 11 inserts (shown in Fig. 2) and the protruding edges 7b to retain a sealing material between the window frame and the wall opening.

The size of this profile is variable according to the needs of the final user and of the market. However, the basic profile can measure 20 mm high in the wall 9, a total of 17.5 millimeters in the three features: support for the trim 6, the hole for the screw that secures the window to the wall opening 5, and the space for the glass pane 4; 10 millimeters high of the adherence or inward surface 7, and 20 to 30 separation distance 3 which makes the base of the profile 55 to 65 millimeters. The profile is manufactured of a plastic, metallic material as well as the precision joint and with tolerance for a sealing to hermetically bind these unions and a sealant to adhere hermetically two glass panes to the frame. This profile can also be made of solid wood, in this case the making of the frame does not use hollow joints although the profile provides an adherence surface and a separation distance. A nonporous overlay in the interior of the frame allows to use a valve and to make a vacuum.

### 2. Visible male 90° joint for Basic profile

The system of the present invention has a precision 90° male joint, to assemble two sections of the basic profile that inserts in the hollow space 10 of the basic profile described in Fig. I. The joint can be visible or not visible; the visible joint assembles the frame with straight cut and conceals possible cutting defects improving the appearance; and the nonvisible joint requires a cut at 45° angle of the profile and does not conceal possible cutting defects. When wood is used to make the frame there are not snap-on joints but the profiles are jointed directly.

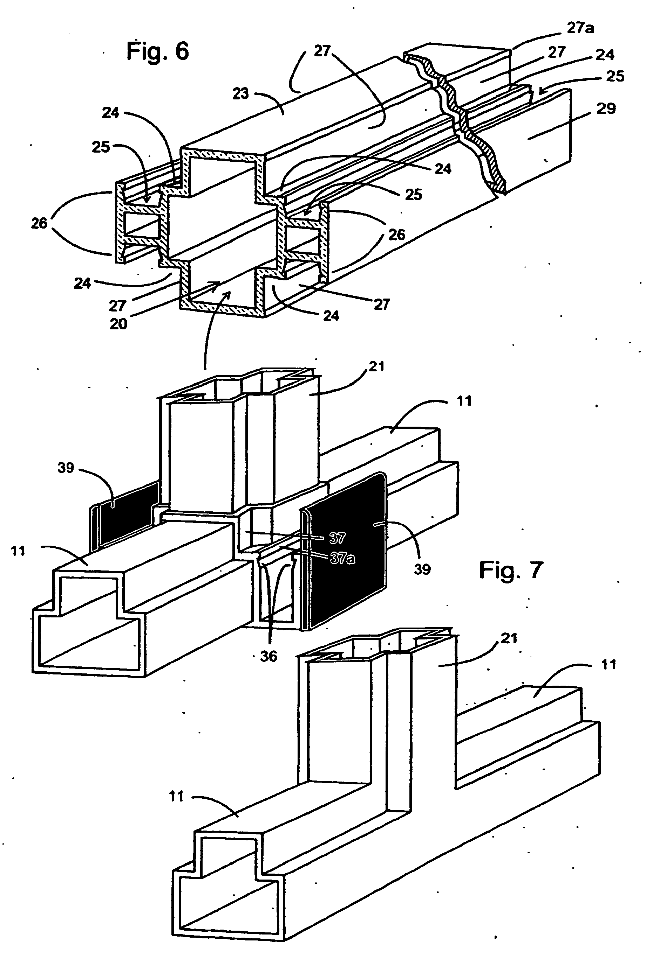

Figure 2 depicts a perspective view of the 90° male nonvisible joint with the two male portions 11 that insert in the hollow space 10 of the basic profile described in Fig. 1. This male joint matches the basic profile in form and dimensions with tolerance for a bonding material all around the protruding bodies 11, that when cured secures an airtight seal. The visible joint is also similar in dimensions and form having external walls that conceal the straight cut of profile, support and notches for the trim, an adherence surface of the joint for the pane with the protruding guide to retain the sealing material. These additional parts will be described in Fig. 7 for a visible Tee.

Figure 3 depicts a perspective view of the nonvisible 90° male joint and the basic profile showing the assembling process for one of the sections of the window frame, which will be made up by four sections of profile and four nonvisible joints. The profile shows a 45 ° cut.

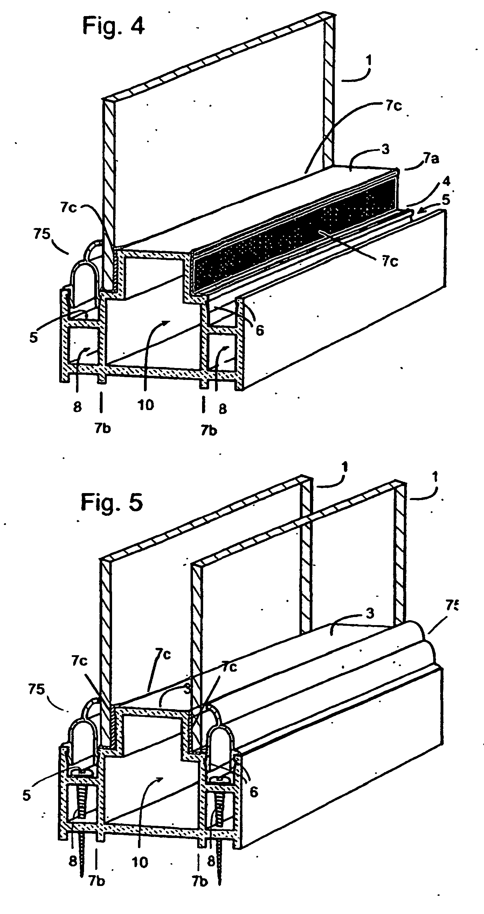

Figure 4 depicts a cross section and perspective view of a section of the basic profile showing the position of the first glass pane 1 with the bonding material 7c on the two inward or adherence surfaces 7, and the trim 75 that will be described in Fig. 12. Figure 5 depicts a cross section and perspective view of a section of the basic profile with the two glass panes assembled on the basic profile, showing the position of the bonding material 7c on both sides of the frame. It also shows the position of two screws to secure the window to the wall opening.

### 3. Double Profile and 90° Tee joint

Casement window assembly usually requires a second body, which makes it necessary to have a double profile to hold the contiguous sections for the glass panes. A double profile is designed for that purpose. Figure 6 depicts a cross section and perspective view of the double profile with the glass panes separation distance 23, the four spaces 24 for the four glass panes, a hole 25 for screws that secure the window to the wall opening, and a support 26 for the trim. It also shows the hollow space 20 where the male joint 21 of the Tee inserts, which will be described in Figure 7, the four inward or adherence surfaces 27 of the frame to the glass panes, with the protruding guide 27a to retain the sealing material. The size and measures of this double profile coincide with the ones of the basic profile and is manufactured with the same material and specifications.

A precision male Tee assembles the double profile with the basic one. As in the other joints this one can be visible or not visible. Figure 7 depicts a perspective view of the 90° visible Tee with the two male joints 11 that insert in the hollow space 10 of the basic profile described in Figure 1. It also depicts the external wall 39 that conceals the straight cut of profile, the support and notches 36 for the trim, the adherence surface 37 of the joint to the glass panes, with the protruding guide 27a to retain the sealing material, and the male joint 21 that inserts in the hollow space 20 of the double profile described in Figure 6. It also depicts a nonvisible Tee with the two male joints 11 that insert in the hollow space 10 of the basic profile described in Fig. 1 and the male joint 21 that inserts in the hollow space 20 of the double profile described in Figure 6.

### 4. Window door basic profile and window door frame profile

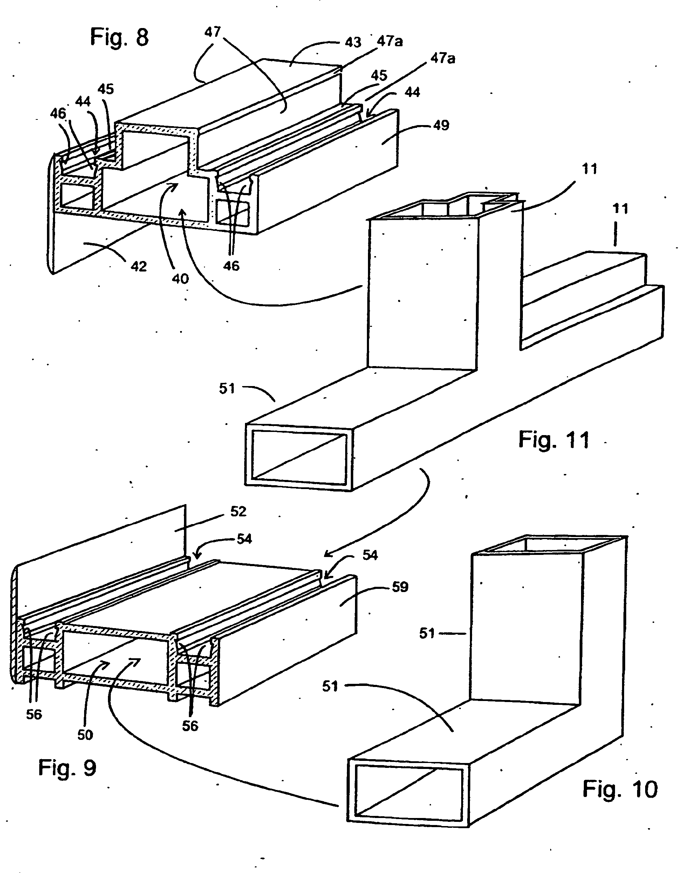

The hinged window door, thai is made with the basic profile and its 90° joint, requires a double profile to hold at one side two glass panes and at the other to stop and seal the window door frame against the vertical side of the window frame. Figure 8 depicts a cross section and perspective view of the vertical profile stopping the window door, with a stop 42 for the door where a seal can be added to provide better sealing, not shown, spaces 44 for the glass panes, supports 46 for two trims. It also shows the pane separation 43, the inward surface 47, a protruding edge 47a to retain the bonding material, an outer surface or wall 49 and the hollow space 40 where the male joint 41 of the nonvisible Tee shown in Fig. 11 inserts.

The window door requires profiles to make the other three sides of the frame to hold and stop the window door when closed. Figure 9 depicts a cross section and perspective view of the window door frame profile with the stop 52 for the window door where a seal can be added to provide better sealing, not shown, an area 55 for the screws, the support and notches 56 for a cover, that is not show in the figure, to hide the screws. It also shows the hollow space 50 where the joint shown in Fig. 10 inserts.

### 5. Nonvisible male 90° joint and nonvisible Tee

The system has a precision male 90° joint, shown in Fig. 10, designed to unite two sections of the profile to hold and stop the window, with the two protruding male portions 51 that insert in the hollow space 50 of the window door profile described in Fig. 9. This joint can be visible or not visible and only the latter is shown in Figure 10. Figure 11 depicts a Tee to assemble the door frame profile (Fig. 8) to the frame of the window (Fig.1), having for that purpose two male joints 11, one inserting in the hollow space 10 of the basic profile described in Fig. 1 and the other in the hollow space 40 of the vertical profile stopping the window door. It also has a male joint 51 that inserts in the female joint 50 of the window door frame described in Fig. 9. This joint can be visible or nonvisible and only the latter is shown in Figure 11.

### 6. Trim

A trim is used to cover the screws that secure the window to the wall opening, the adherence surface which will have a bonding material and the valve when installed vertically. The trim is decorative and has no mechanical function of holding the glass to the frame; it is made by extrusion and snapped into the profile.

Figure 12 depicts a cross section and perspective view of the trim with the point of contact 74 with the glass pane that transmits the pressure to the support on the frame, or on the visible joint and Tee, the arm 75 of the trim and the legs 76, with notches to hold by pressure on the profile, joint or Tee. The trim can be cut at 45° for its union in corners or in straight cut; in this case a trim cover is used to conceal cutting imperfections. This cover is not shown.

### 7. Vacuum control valve

Functions of the vacuum control valve. The vacuum control valve is an essential part in the system and its function is to control the airflow to and from the airtight unit and the frame's hollow spaces. The valve is made of a similar plastic, metallic or any suitable material and is installed permanently in the window to be used at any time. The valve can be manufactured as part of the joint or separately to be bonded in its final position in a joint or in a profile, in this latter event when assembling the window.

Characteristics of the valve. The vacuum control valve has three parts, depicted in Fig. 13 as a cross section along them:
1. A rotary cylinder with a hole along it, screwing threads in its external surface and with both ends opened, one of which is designed to hold a seal. The external wall that has two sections, one with serrated surface 87A to hold a flexible hose that connects the valve to an air extractor and the other one threaded 87B to screw the rotary cylinder in the fixed cylinder, the external orifice 88, and the internal one 81 that inserts in the orifice 80 of the seal, with the external surface with threads to screw in the seal, orifices around it 89 for air flow, and the ring 94 to hold in place the second seal.
2. A seal screwed to the rotary cylinder that seats in the concave part of the fixed cylinder with the air flow orifice 80, the second seal 92 that receives the ring 94 of the rotary cylinder, the orifices 93 for air flow, the convex body 91 that seats on the concave portion 83 of the fixed cylinder, the internal threaded surface 96 to screw the seal into the rotary cylinder.
3. A fixed cylinder with a hole 90 along it, where the rotary cylinder is screwed, with the threads up to half of the internal surface and the internal concave surface 83 where the seal seats, an internal end 85 with a serrated surface to receive a general purpose filtering material, not described in this patent, to retain the particles produced when cutting profiles, particles that can clog the orifices of the valve. This end is open 84 and has also orifices at its sides 86 to improve air flow. This cylinder 82 has a ring to bond the valve to the wall of a profile or joint.

Figure 14 depicts the valve assembled in closed and opened position in cross section along the cylinders. The rotary cylinder is screwed in the fixed cylinder which makes the seal to seat on the concave portion of the fixed cylinder and closes the air passages, while when the rotary cylinder is unscrewed it creates a space where air can flow in both directions. When the desired level of vacuum inside the unit is reached, the rotary cylinder is screwed in to the closed position and the air extractor set to off. The seal is made of a strong but flexible material since it is intended to seat against the concave portion of the fixed cylinder and closes tightly mainly because of the atmospheric pressure on the seal, which deforms it to adjust exactly to the receiving concave surface. This strong and flexible material is commercially available and known to those skilled in the art.

Since the volume of air inside the window's airtight unit is small the capacity of the negative pump or extractor is also small and operates for a couple of minutes, depending on the level of vacuum desired. Very high levels of vacuum will require more capacity and more time, however, for practical purposes a small capacity extractor will suffice. When the air is pumped out from the window's airtight unit the external part of the seal 96 acts as a second seal that, mainly by atmospheric pressure, prevents the air to enter into this inner portion of the valve making this operation more efficient.

Figure 15 depicts a perspective view of the valve with the two cylinders screwed in, showing the external end 88 of the rotary cylinder and the serrated surface 87A to hold a flexible hose that connects the valve to an air extractor. This figure also shows the ring 82 to secure the valve to a wall's profile or joint. It also shows the internal end 85 of the fixed cylinder, with a serrated surface to receive a general purpose filtering material to retain the particles that can clog the orifices of the valve, the internal orifice 84 and the lateral orifices 86.

Valve Location and Position. The valve can be factory assembled in one of the joints ready to be installed. In this case the fixed cylinder is manufactured as part of the joint and the rotary cylinder and the seal are manufactured separately and then put together in the joint. The three components can be also manufactured separately and put together to be installed and bonded in one joint or in a profile, using the ring 82. In both cases the valve can have a horizontal or vertical position.

### 8. Assembly of components

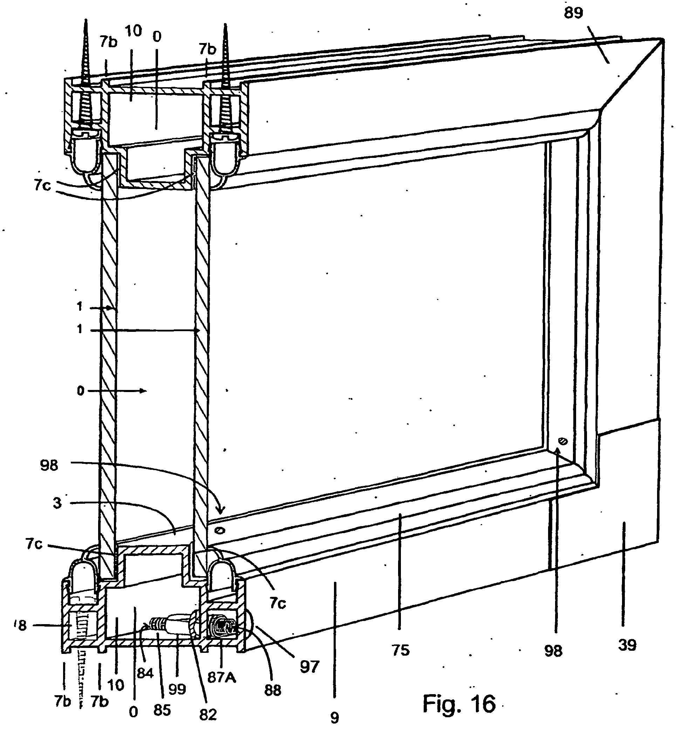

Figure 16 depicts a perspective, partial cross sectional view of an assembled window with the profile's wall or external surface 9, the hollow space 10 of the basic profile where the male joint 11 inserts, the trim 75, the cover of the valve 97, the hole 98 that places the hollow space of the profile in communication with the airtight unit between the glass panes 1. It also shows the spaces 0 where vacuum is created when air is evacuated from the airtight chamber and the space between the two glass panes. The profiles and joints form an airtight frame and chamber in turn forming an airtight unit with the two glass panes. It also shows the valve in horizontal position and the screws to secure the window to the wall opening. It shows the visible joint 39 and the 45° cut of the profile when the nonvisible joint is used. The description of the other components of the window corresponds to the numbers given when each component was described individually.

Although the invention has been described in considerable detail with reference to certain preferred embodiments, one skilled in the art will appreciate that the present invention can be practiced by other than the preferred embodiments, which have been presented for the purpose of illustration and not of limitation. Therefore, the spirit and scope of the appended claims should not be limited to the description of the preferred embodiments herein.

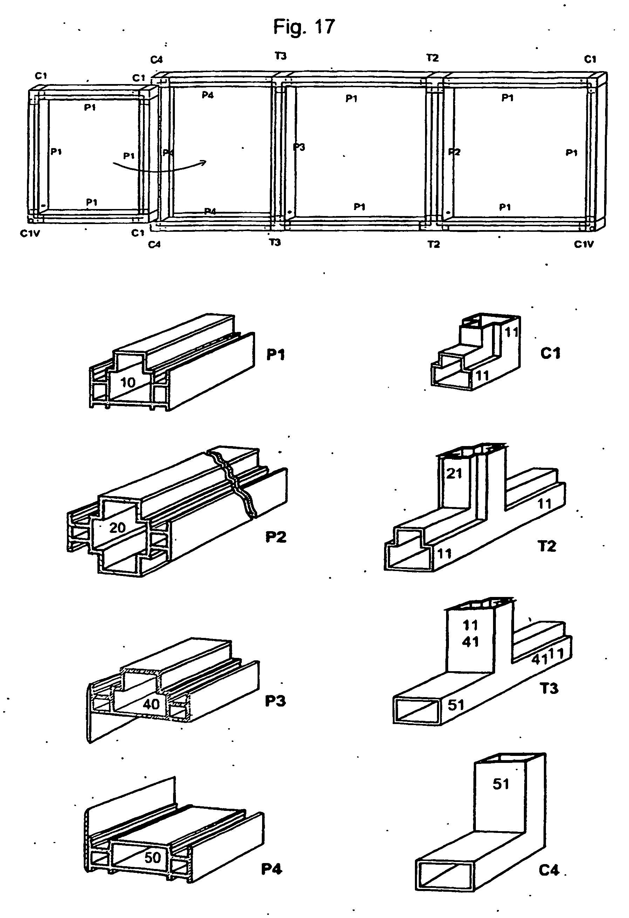

Figure 17 is a summary of an assembled window showing a) the position of the described components when assembled in a window and b) the reduced size of figure of each component for easy identification.

## Claims

1. A building partition with a hollow airtight frame defining an airtight chamber:
said frame having first and second outwardly facing adherent surfaces (7) located substantially all along a perimeter of said frame; and
a first panel (1) secured to the first adherent surface (7) of the frame, the first panel having an outer edge dimensioned so that the outer edge of the first panel fits closely to the said first adherent surface (7) of the frame,
a second panel (1) secured to the second adherent surface (7) of the frame, the second panel having an outer edge dimensioned so that the outer edge of the second panel fits closely to the said second adherent surface of the frame, the first panel and the second panel being arranged in substantially parallel spaced relationship, whereby the first panel and the second panel are secured to the adherent surfaces (7) of the frame such that an airtight chamber (0) is formed between the first panel (1), the second panel (1) and the inner surface (3) of the frame,
**characterized in that** the building partition comprises
a plurality of hollow joints (11) having end portions; and a plurality of hollow profiles (10) having end sections, the end portions of the hollow joints being dimensioned to snugly fit within the end sections of the hollow profiles such that the hollow joints and the hollow profiles may be assembled to form the hollow frame,
a valve (99) installed in the hollow frame, the valve providing a fluid communication path from outside the hollow frame to the airtight chamber (0), the valve being adjustable from a closed position where no fluid may pass from outside the hollow frame to the airtight chamber to an open position where fluid may pass from outside the hollow frame to the airtight chamber,
at least one hole (98) in the inner surface (3) providing a fluid communication path between the airtight space (0) and the airtight chamber (0), whereby fluid may pass from outside the hollow frame through the valve through the airtight space and into the airtight chamber when the valve is in the open position.

2. The building partition of claim 1 wherein:
the first panel and the second panel are glass panes.

3. The building partition of claim 1 wherein:
the hollow joints (11) and the hollow profiles (10) are dimensioned such that an adhesive may be applied to surfaces of the hollow joints and to corresponding surfaces of the hollow profiles that mate when the hollow joints and hollow profiles are assembled, forming an airtight union.

4. The building partition of claim 1 wherein the valve (99) comprises:
a tubular fixed cylinder (90) having an internal surface with threads and a concave seat (83);
a rotary cylinder (88) having an external surface with threads (87B) engaging the threads on the internal surface of the fixed cylinder and having at least one orifice (89) extending through a wall of an internal end portion of the rotary cylinder; and
a seal with a convex surface (91) fastened on the internal end portion (94) of the rotary cylinder,
whereby the valve is placed in the closed position by screwing the rotary cylinder such that the convex surface (91) of the seal seats on the concave part (83) of the fixed cylinder.

5. The building partition of claim 1 further comprising:
at least one trim section (75) having mounting flanges (76), the frame having notches (6) dimensioned to receive the mounting flanges and secure each of the trim sections to the frame.

6. An insulating window comprising a hollow airtight frame defining an airtight chamber:
said frame having first and second outwardly facing adherent surfaces (7) located substantially all along a perimeter of said frame;
a first glass pane (1) secured to the first adherent surface (7) of the frame, the first glass pane having an outer edge dimensioned so that the outer edge of the first glass pane fits closely to the first adherent surface (7) of the frame; and
a second glass pane (1) secured to the second adherent surface (7) of the frame, the second glass pane having an outer edge dimensioned so that the outer edge of the second glass pane fits closely to the second adherent surface (7) of the frame,
wherein the first glass pane and the second glass pane are arranged in substantially parallel spaced relationship,
the first glass pane and the second glass pane being secured to the adherent surfaces (7) of the frame such that an airtight space is formed between the first glass pane (1), the second glass pane (1) and the inner surface (3) of the frame,
**characterized in that** the window comprises
a plurality of hollow joints (11) having end portions; and
a plurality of hollow profiles (10) having end portions
the end portions of the hollow joints being dimensioned to snugly fit within the end sections of the hollow profiles such that the hollow joints and the hollow profiles may be assembled to form a hollow frame,
a valve (99) installed in the hollow frame, the valve providing a fluid communication path from outside the hollow frame to the airtight chamber (0), and through a hole (98) in the inner surface (3) to the airtight space (0), the valve being adjustable from a closed position where no fluid may pass from outside the hollow frame to the airtight chamber to an open position where fluid may pass from outside the hollow frame to the airtight chamber;
the frame including a hole.(98) providing a fluid communication path between the airtight space and the airtight chamber, whereby fluid may pass from outside the hollow frame through the valve through the airtight chamber and into the airtight space when the valve is in the open position.

7. The insulating window of claim 6 wherein:
the hollow joints (11) and hollow profiles (10) are dimensioned such that an adhesive may be applied to the surfaces of the hollow joints and to corresponding surfaces of the hollow profiles that mate when the hollow joints and hollow profiles are assembled.

8. The insulating window of claim 7 wherein the valve (99) comprises:
a tubular fixed cylinder (90) having an internal surface with threads and a concave seat (83);
a tubular rotary cylinder (88) having an external surface with threads (87B) engaging the threads on the internal surface of the fixed cylinder and having at least one orifice (89) extending through a wall of an internal end portion of the rotary cylinder; and
a seal with a convex surface (91) fastened on the internal end portion (94) of the rotary cylinder,
whereby the valve (99) is placed in the closed position by screwing the rotary cylinder such that the convex surface of the seal (91) seats on the concave part of the fixed cylinder (83).

9. The insulating window of claim 7 further comprising:
at least one trim section (75) having mounting flanges (76), the inward surface of the frame having a notch (6) dimensioned to receive the mounting flanges and secure each of the trim sections to the inward surface (7) of the frame.

10. The insulating window of claim 7 wherein:
a desiccating material is disposed in the airtight chamber.

11. The insulating window of claim 7 wherein:
supports are installed between the first glass pane and the second glass pane.

12. The insulating window of claim 7 wherein:
reinforcing members are disposed in the airtight chamber.

## Patentansprüche

1. Ein Bauelement mit einem hohlen luftdichten Rahmen, der eine luftdichte Kammer definiert:
der besagte Rahmen hat eine erste und zweite nach außen zeigende anhaftende Oberflächen (7), die sich im Wesentlichen alle entlang der Umfangslänge des besagten Rahmens befinden; und
eine erste Verkleidung (1) befestigt an die erste anhaftende Oberfläche (7) des Rahmens; die erste Verkleidung hat einen äußeren Rand der so bemessen ist, dass der äußere Rand der ersten Verkleidung zur besagten ersten anhaftenden Oberfläche (7) des Rahmens passt,
eine zweite Verkleidung (1) befestigt an die zweite anhaftende Oberfläche (7) des Rahmens, die zweite Verkleidung, deren äußerer Rand so bemessen ist, dass der äußere Rand der zweiten Verkleidung genau zur besagten zweiten anhaftenden Oberfläche des Rahmens passt, die erste Verkleidung und die zweite Verkleidung, die im Wesentlichen parallel dazu angeordnet wird, wobei die erste Verkleidung und die zweite Verkleidung an die anhaftenden Oberflächen (7) des Rahmens befestigt werden so daß eine luftdichte Kammer (0) zwischen der ersten Verkleidung (1), der zweiten Verkleidung (1) und der inneren Oberfläche (3) des Rahmens gebildet wird, **dadurch gekennzeichnet, daß** das Bauelement enthält
mindestens eine Bohrung (98) in der inneren Oberfläche (3), die einen fluiden Verbindungsweg zwischen dem luftdichten Raum (0) und der luftdichten Kammer (0) bereitstellt, wobei das Fluid außerhalb vom hohlen Rahmen durch das Ventil durch den luftdichten Raum und in den luftdichten Kammer überschreiten kann, wenn das Ventil in der geöffneten Position ist.
ein Ventil (99), das im hohlen Rahmen installiert ist, das Ventil einen fluiden Verbindungsweg außerhalb vom hohlen Rahmen zur luftdichten Kammer (0) bereitstellt, das Ventil von einer geschlossenen Position, in der kein Fluid außerhalb vom hohlen Rahmen zur luftdichten Kammer dringen kann, zu einer geöffneten Position angepasst werden kann, in der Fluid außerhalb vom hohlen Rahmen zur luftdichten Kammer dringen kann,
mehrere hohle Verbindungen (11), die Endteile haben; und mehrere hohle Profile (10), die Endabschnitte aufweisen; die Endteile der hohlen Verbindungen werden so bemessen, dass sie gut in die Endabschnitte der hohlen Profile passen, so dass die hohlen Verbindungen und die hohlen Profile zusammengebaut werden können, um den hohlen Rahmen zu bilden.

2. Das Bauelement von Anspruch 1, worin:
die erste Verkleidung und die zweite Verkleidung Glasscheiben sind.

3. Das Bauelement von Anspruch 1, worin:
die hohlen Verbindungen (11) und die hohlen Profilen (10) so bemessen werden, dass ein Kleber an den Oberflächen der hohlen Verbindungen und an entsprechenden Oberflächen der hohlen Profile angewendet werden kann, die sich verbinden, wenn die hohlen Verbindungen und die hohlen Profile zusammengebaut werden und einen luftdichten Anschluß bilden.

4. Das Bauelement von Anspruch 1, worin das Ventil (99) enthält:
ein röhrenförmiger fixierter Zylinder (90), der eine interne Oberfläche mit Gewinden und einem konkaven Sitz (83) hat;
ein Drehzylinder (88), der eine externe Oberfläche mit den Gewinden (87B) aufweist und mit den Gewinden auf der internen Oberfläche des fixierten Zylinders einrastet und mindestens eine Öffnung (89) hat, die sich durch eine Wand eines internen Endteils des Drehzylinders erstreckt; und
eine Dichtung mit einer konvexen Oberfläche (91), die an den internen Endteil (94) des Drehzylinders befestigt ist,
wobei das Ventil in die geschlossene Position gebracht wird, indem der Drehzylinder so geschraubt wird, dass die konvexe Oberfläche der Dichtung (91) auf dem konkaven Teil (83) des fixierten Zylinders liegt.

5. Das Bauelement des Anspruches 1 enthält weiter:
mindestens ein Greiferabschnitts (75), die Befestigungsflanschen (76) haben; der Rahmen hat Kerben (6), die so bemessen sind, dass sie die Befestigungsflanschen empfangen und jeden der Graifer abschnitt an den Rahmen befestigen.

6. Ein isolierendes Fenster, das einen hohlen luftdichten Rahmen enthält, der eine luftdichte Kammer bildet:
der besagte Rahmen hat eine erste und zweite nach außen zeigende anhaftende Oberflächen (7), die sich im Wesentlichen alle entlang der Umfangslänge des besagten Rahmens befinden; und
eine erste Glasscheibe (1) befestigt an die erste anhaftende Oberfläche (7) des Rahmens; die erste Glasscheibe hat einen äußeren Rand der so bemessen ist, dass der äußere Rand der ersten Glasscheibe zur besagten ersten anhaftenden Oberfläche (7) des Rahmens passt; und
eine zweite Glasscheibe (1) befestigt an die zweite anhaftende Oberfläche (7) des Rahmens, die zweite Glasscheibe, deren äußerer Rand so bemessen ist, dass der äußere Rand der zweiten Glasscheibe genau zur besagten zweiten anhaftenden Oberfläche des Rahmens passt,
wobei die erste Glasscheibe und die zweite Glasscheibe im Wesentlichen parallel angeordnet sind,
die erste Glasscheibe und die zweite Glasscheibe werden so an die anhaftenden Oberflächen (7) des Rahmens befestigt, dass eine luftdichte Kammer (0) zwischen der ersten Glasscheibe (1), der zweiten Glasscheibe (1) und der inneren Oberfläche (3) des Rahmens gebildet wird, **dadurch gekennzeichnet, dass** das Bauelement enthält
der Rahmen weist eine Bohrung (98) auf, die einen fluiden Verbindungsweg zwischen dem luftdichten Raum und der luftdichten Kammer bereitstellt, wobei das Fluid außerhalb vom hohlen Rahmen durch das Ventil durch den luftdichten Raum und in den luftdichten Kammer überschreiten kann, wenn das Ventil in der geöffneten Position ist.
ein Ventil (99), das im hohlen Rahmen installiert ist, das einen fluiden Verbindungsweg außerhalb vom hohlen Rahmen zur luftdichten Kammer (0) und durch eine Bohrung (98) in der inneren Oberfläche (3) zum luftdichten Raum (0) bereitstellt, das Ventil von einer geschlossenen Position, in der kein Fluid außerhalb vom hohlen Rahmen zur luftdichten Kammer dringen kann, zu einer geöffneten Position angepasst werden kann, in der Fluid außerhalb vom hohlen Rahmen zur luftdichten Kammer dringen kann,
mehrere hohle Verbindungen (11), die Endteile haben; und
mehrere hohle Profile (10), die Endteile haben
die Endteile der hohlen Verbindungen werden so bemessen, dass sie gut in die Endabschnitte der hohlen Profile passen, so dass die hohlen Verbindungen und die hohlen Profile zusammengebaut werden können, um den hohlen Rahmen zu bilden.

7. Das isolierende Fenster von Anspruch 6, worin:
die hohlen Verbindungen (11) und die hohlen Profilen (10) so bemessen werden, dass ein Kleber an den Oberflächen der hohlen Verbindungen und an entsprechenden Oberflächen der hohlen Profile angewendet werden kann, die sich verbinden, wenn die hohlen Verbindungen und die hohlen Profile zusammengebaut werden.

8. Das isolierende Fenster von Anspruch 7, worin das Ventil (99) enthält:
ein röhrenförmiger fixierter Zylinder (90), der eine interne Oberfläche mit Gewinden und einem konkaven Sitz (83) hat;
ein röhrenförmiger Drehzylinder (88), der eine externe Oberfläche mit den Gewinden (87B) aufweist und mit den Gewinden auf der internen Oberfläche des fixierten Zylinders einrastet und mindestens eine Öffnung (89) hat, die sich durch eine Wand eines internen Endteils des Drehzylinders erstreckt; und
eine Dichtung mit einer konvexen Oberfläche (91), die an den internen Endteil (94) des Drehzylinders befestigt ist,
wobei das Ventil (99) in die geschlossene Position gebracht wird, indem der Drehzylinder so geschraubt wird, dass die konvexe Oberfläche der Dichtung (91) auf dem konkaven Teil (83) des fixierten Zylinders liegt.

9. Das isolierende Fenster von Anspruch 7 enthält weiter:
mindestens ein Greiferabschnitts (75), die Befestigungsflanschen (76) haben; die innere Oberfläche des Rahmens hat Kerben (6), die so bemessen sind, dass sie die Befestigungsflanschen empfangen und jeden der Greiferabschnitt an die innere Oberfläche des Rahmens befestigen.

10. Das isolierende Fenster von Anspruch 7, worin:
ein austrocknendes Material im luftdichten Raum verwendet wird.

11. Das isolierende Fenster von Anspruch 7, worin:
Stützen zwischen die erste Glasscheibe und die zweite Glasscheibe angebracht werden.

12. Das isolierende Fenster von Anspruch 7, worin:
verstärkende Teile im luftdichten Raum verwendet werden.

## Revendications

1. Une cloison de bâtiment avec une armature creux hermétique définissant une chambre hermétique:
la dite armature ayant premier et second extérieurement face aux des surfaces d'adhérent (7) localisé substantiellement le long de le périmètre de la dite armature; et
un premier panneau (1) fixé à la première surface adhérente (7) de l'armature, le premier panneau ayant un bord externe dimensionné de sorte que le bord externe du premier panneau ajuste étroitement à la dite première surface adhérente (7) de l'armature,
un deuxième panneau (1) fixé à la deuxième surface adhérente (7) de l'armature, le deuxième panneau ayant un borde externe dimensionné de sorte que le bord externe de le deuxième panneau ajuste étroitement à la dite deuxième surface adhérente de l'armature, le premier panneau et le deuxième panneau étant arrangés essentiellement dans parallèle espacé rapport, par lequel le premier panneau et le deuxième panneau soient fixés aux surfaces adhérentes (7) de l'armature tels qu'une chambre hermétique (0) est formée entre le premier panneau (1), le deuxième panneau (1) et la surface intérieure (3) de l'armature, **caractérisé en ce que** la cloison de bâtiment comporte
au moins un trou (98) dans la surface intérieure (3) fournissant un chemin de communication fluide entre l'espace hermétique (0) et la chambre hermétique (0), par lequel le fluide puisse passer de l'extérieur de l'armature creux par la valve par l'espace hermétique et dans la chambre hermétique, quand la valve est en position d'ouverture.
une valve (99) installé dans l'armature creux, la valve fournissant un chemin de communication fluide de l'extérieur de l'armature creux à la chambre hermétique (0), la valve étant réglable d'une position fermée où aucun fluide peut ne pas passer de l'extérieur de l'armature creux à la chambre hermétique à une position d'ouverture où le fluide peut passer de l'extérieur de l'armature creux à la chambre hermétique,
une pluralité de joints creux (11) ayant des parties bouts; et une pluralité de profils creux (10) ayant des bouts sections, les bouts sections des joints creux étant dimensionnés pour entrer confortablement dans les bouts sections de les profils creux tels que les joints creux et les profils creux peuvent être assemblés pour former l'armature creux.

2. La cloison de bâtiment de la revendication 1 où:
le premier panneau et le deuxième panneau sont des vitrages.

3. La cloison de bâtiment de la revendication 1 où:
les joints creux (11) et les profils creux (10) sont dimensionnés tels qu'un adhésif peut être appliqué aux surfaces des joints creux et aux surfaces correspondantes des profils creux qui joignent quand les joints creux et les profils creux sont assemblés, formant une union hermétique.

4. La cloison de bâtiment de la revendication 1 où la valve (99) comporte:
un cylindre fixe tubulaire (90) ayant une surface interne avec des spiraux et un siège concave (83);
un cylindre rotatoire (88) ayant une surface externe avec des fils spirales (87B) engageant les fils sur la surface interne du cylindre fixe et ayant au moins un orifice (89) passant à travers d'un mur de le bout interne du cylindre rotatoire; et
un joint avec une surface convexe (91) a attaché sur le bout section interne (94) du cylindre rotatoire,
par lequel la valve est placée dans la position fermée en vissant le cylindre rotatoire tels que la surface convexe (91) du joint sièges sur la pièce concave (83) du cylindre fixe.

5. La cloison de bâtiment de la revendication 1 comportant en outre:
au moins une baguette (75) ayant des entailles de support (76), l'armature faisant dimensionner des entailles (6) pour recevoir les brides de support et pour fixer chacune des baguettes à l'armature.

6. Une fenêtre isolante comportant une armature hermétique creux définissant une chambre hermétique:
la dite armature ayant premier et second extérieurement face aux des surfaces d'adhérent (7) localisé substantiellement le long de le périmètre de la dite armature; et
un premier vitrage (1) fixé à la première surface adhérente (7) de l'armature, le premier vitrage ayant un bord externe dimensionné de sorte que le bord externe du premier vitrage ajuste étroitement à la première surface adhérente (7) de l'armature; et
un deuxième vitrage (1) fixé à la deuxième surface adhérente (7) de l'armature, le deuxième vitrage ayant un borde externe dimensionné de sorte que le bord externe de deuxième vitrage ajuste étroitement à la deuxième surface adhérente (7) de l'armature,
où le premier vitrage et le deuxième vitrage sont arrangés essentiellement dans rapport parallèle espacé,
le premier vitrage et le deuxième vitrage étant fixé aux surfaces d'adhérent (7) de l'armature tels qu'un espace hermétique est formé entre le premier vitrage (1), le deuxième vitrage (1) et la surface intérieure (3) de l'armature, **caractérisée en ce que** la cloison de bâtiment comporte
l'armature comprenant un trou (98) fournissant un chemin de communication fluide entre l'espace hermétique et la chambre hermétique, par lequel le fluide puisse passer de l'extérieur de l'armature creux par la valve par la chambre hermétique et dans l'espace hermétique quand la valve est en position d'ouverture,
une valve (99) a installé dans l'armature creux, la valve fournissant un chemin de communication fluide de l'extérieur de l'armature creux à la chambre hermétique (0), et par un trou (98) dans la surface intérieure (3) à l'espace hermétique (0), la valve étant réglable d'une position fermée où aucun fluide peut ne pas passer de l'extérieur de l'armature creux à la chambre hermétique à une position d'ouverture où le fluide peut passer de l'extérieur de l'armature creux à la chambre hermétique;
une pluralité de des joints creux (11) ayant des bouts sections; et
une pluralité de profils creux (10) ayant des bouts sections
les bouts sections des joints creux étant dimensionnés pour entrer confortablement dans les bouts sections de les profils creux tels que les joints creux et les profils creux peuvent être assemblés pour former une armature creux.

7. La fenêtre isolante de la revendication 6 où :
les joints creux (11) et les profils creux (10) sont dimensionnés tels qu'un adhésif peut être appliqué aux surfaces des joints creux et aux surfaces correspondantes des profils creux qui joignent quand les joints creux et les profils creux sont assemblés.

8. La fenêtre isolante de la revendication 7 où la valve (99) comporte:
un cylindre fixe tubulaire (90) ayant une surface interne avec des spiraux et un siège concave (83) ;
un cylindre rotatoire tubulaire (88) ayant une surface externe avec des spiraux (87B) engageant les spiraux de la surface interne du cylindre fixe et ayant au moins un orifice (89) passant à travers d'un mur de le bout section interne du cylindre rotatoire; et
un joint avec une surface convexe (91) attaché sur le bout section interne (94) du cylindre rotatoire,
par lequel la valve (99) est placée dans la position fermée en vissant le cylindre rotatoire tels que la surface convexe sièges (91) sur la pièce concave du cylindre fixe (83).

9. La fenêtre isolante de la revendication 7 comportant en outre:
au moins une baguette (75) ayant des brides de support (76), la surface interne de l'armature faisant une entaille (6) dimensionné pour recevoir les brides de support et pour fixer chacune des baguettes sur la surface interne (7) de l'armature.

10. La fenêtre isolante de la revendication 7 où:
un matériel de dessèchement est disposé dans la chambre hermétique.

11. La fenêtre isolante de la revendication 7 où:
des appuis sont installés entre le premier vitrage et le deuxième vitrage.

12. La fenêtre isolante de la revendication 7 où:
renforçant membres sont disposés dans la chambre hermétique.
